# FASCICULE DE BREVET EUROPEEN

(11) **EP 1 070 977 B1**
(45) Date de publication et mention de la délivrance du brevet: **17.09.2003**
(21) Numéro de dépôt: 00402022.8
(22) Date de dépôt: 13.07.2000
(51) Int. Cl.: G02B 27/32, F41G 3/00

(54) **Système de visée optique**
Optisches Zielgerät
Optical aiming device

(30) Priorité: 22.07.1999 FR 9909512
(43) Date de publication de la demande: 24.01.2001
(73) Titulaire: Aerospatiale Matra Missiles, 75116 Paris (FR)
(72) Inventeur: Adda, Maurice, 92160 Antony (FR)
(74) Mandataire: Hauer, Bernard

(56) Documents cités:
- US-A- 4 018 533
- US-A- 4 540 238
- US-A- 5 214 285
- US-A- 5 784 182

## Description

La présente invention concerne un système de visée optique.

Ledit système de visée optique, par exemple des lunettes d'observation militaires, qui peut être, dans le cadre de la présente invention, un système exclusivement optique ou un système optoélectronique, comporte de façon connue au moins un canal optique, auquel est associé au moins un réticule. Un tel réticule permet, notamment, de visualiser une direction d'observation prédéterminée, qui correspond généralement à l'axe central ou axe optique dudit canal optique. A cet effet, ledit réticule comporte le plus souvent un indicateur en forme de croix, qui est positionné de sorte que l'intersection des axes de la croix signale ladite direction d'observation prédéterminée.

On peut citer par exemple les publications US 5,784,182 et US 5,214,285.

On sait que, notamment en raison de particularités physiques des yeux, certaines portions du champ de vision d'un être humain ne sont pas visibles ou difficilement visibles. Cet inconvénient est bien entendu toujours présent lorsqu'un observateur utilise pour l'observation un système optique de visée. Ce problème de vision peut être particulièrement gênant ou fâcheux, notamment lorsque l'observateur est par exemple un militaire et que ledit système de visée optique correspond à des lunettes d'observation ou fait partie d'un dispositif de détection de cible et/ou de guidage d'armes (missiles, roquettes, ...) d'un système d'armes, puisque dans ce cas il peut arriver qu'une cible ennemie (fantassin, char, ...) se trouvant dans une telle portion non visible ne soit pas détectée par l'observateur, les conséquences d'une telle situation pouvant être très graves.

Ce problème de vision est d'autant plus important que l'oeil humain réalise des adaptations ou corrections visuelles qui sont telles que le champ de vision apparaît continu à l'être humain et que ce dernier ne se rend pas compte de l'existence d'une telle portion non visible et ne peut donc pas la localiser.

La présente invention concerne un système de visée optique qui permet de remédier à ces inconvénients.

A cet effet, selon l'invention, ledit système de visée optique comportant au moins un canal optique auquel est associé au moins un réticule, est remarquable en ce que ledit réticule comporte au moins une marque qui est visible par un observateur utilisant ledit système de visée optique et qui est centrée approximativement autour d'un point de centrage, ledit point de centrage étant situé sensiblement à une distance qui est représentative d'un angle de visée compris entre 13° et 18°, par rapport à une direction d'observation prédéterminée selon une première direction, ladite première direction étant représentative sur ledit système de visée optique de la direction passant sensiblement aux centres des yeux d'un observateur qui utilise ledit système de visée optique.

Ainsi, ledit réticule permet d'avertir tout observateur utilisant ledit système de visée optique de l'existence d'un problème de vision dans les directions d'observation situées au niveau et/ou à proximité de la marque visualisée grâce à l'invention.

Plus précisément, ladite marque permet de mettre en évidence une "tache aveugle" existant pour tout oeil humain. Cette tache aveugle qui représente une portion du champ de vision de l'oeil, à l'intérieur de laquelle aucune vision n'est possible, est due à l'absence, dans la rétine, de cellules nerveuses sensibles à la lumière, au niveau de l'arrivée du nerf optique dans ladite rétine.

Par conséquent, grâce à l'invention, tout observateur utilisant ledit système de visée optique est alerté sur ce qu'il risque de ne pas voir en regardant fixement le centre du réticule et est informé en permanence de la position de l'image de cette tache aveugle dans la scène observée. En particulier, un observateur militaire est ainsi averti qu'une cible potentielle non visible est susceptible d'être située dans son champ de vision, dans l'alignement de ladite marque.

De façon avantageuse, ledit réticule est formé dans au moins un plan de focalisation dudit système de visée optique. A cet effet, ledit système de visée optique comporte des moyens connus pour former ledit réticule, par exemple des moyens réalisant une projection de ladite marque dans un plan réticulaire.

Par ailleurs, dans un mode de réalisation simplifié, ledit réticule comporte une seule marque qui est située, par rapport à ladite direction d'observation et selon ladite première direction, du même côté que l'oeil, en particulier l'oeil directeur, utilisé par un observateur regardant selon ledit canal optique.

Dans un autre mode de réalisation, ledit réticule comporte deux marques situées de part et d'autre de ladite direction d'observation, selon ladite première direction. Ainsi, la visée au moyen du système de visée optique peut être effectuée indifféremment par l'oeil droit et l'oeil gauche. Ledit système de visée optique, par exemple une longue vue, peut par conséquent être utilisé aussi bien par un observateur dont l'oeil directeur est l'oeil droit, que par un observateur dont l'oeil directeur est l'oeil gauche.

En outre, dans un mode de réalisation particulier concernant un système de visée, par exemple des jumelles, qui comporte deux canaux optiques, un premier canal optique destiné à l'oeil droit d'un observateur et un second canal optique destiné à l'oeil gauche de cet observateur, de façon avantageuse, ledit premier canal optique comporte un réticule comprenant une marque qui est située à droite de ladite direction d'observation selon ladite première direction, et ledit second canal optique comporte un réticule comprenant une marque qui est située à gauche de ladite direction d'observation selon ladite première direction.

Dans le cadre de la présente invention, ladite marque peut bien entendu présenter différentes formes.

Dans un premier mode de réalisation, ladite marque présente la forme d'une ellipse
- dont le petit axe est orienté selon ladite première direction et présente une longueur représentative d'un angle de visée de 7° ; et
- dont le grand axe est orienté selon une seconde direction orthogonale à la fois à ladite première direction et à ladite direction d'observation et présente une longueur représentative d'un angle de visée de 8°.

Dans un second mode de réalisation, ladite marque présente une forme oblongue pourvue à chacune des extrémités le long de ladite première direction d'un demi-cercle, la distance entre les centres desdits demi-cercles est représentative d'un angle de visée de 5°, et ladite marque présente une largeur représentative d'un angle de visée de 8°, selon ladite seconde direction qui est orthogonale à la fois à ladite première direction et à ladite direction d'observation.

Les figures du dessin annexé feront bien comprendre comment l'invention peut être réalisée. Sur ces figures, des références identiques désignent des éléments semblables.

La figure 1 illustre schématiquement un réticule d'un système de visée optique conforme à l'invention, dans un premier mode de réalisation.

Les figures 2 et 3 montrent partiellement une même scène susceptible d'être observée par un système de visée optique conforme à l'invention, à savoir respectivement telle qu'elle existe effectivement et telle qu'elle est vue par un observateur.

La figure 4 illustre schématiquement un réticule d'un système de visée optique conforme à l'invention, dans un second mode de réalisation.

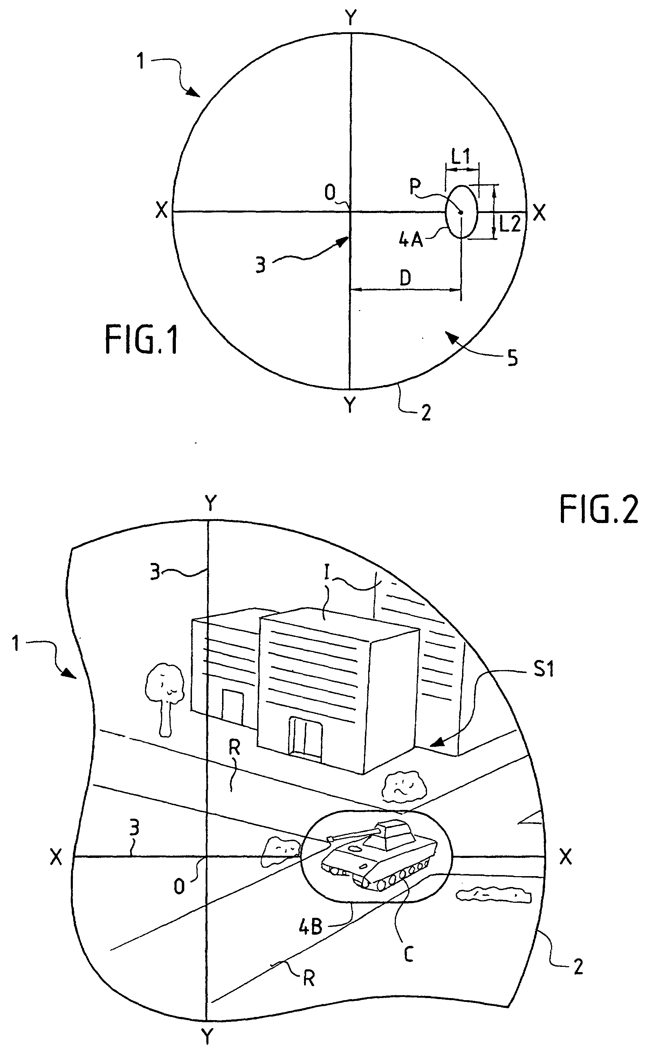

Le système de visée optique 1 conforme à l'invention et représenté partiellement sur la figure 1 comporte un canal optique 2, auquel est associé un réticule 3.

De façon connue, ledit réticule 3 présente une forme en croix :
- dont le croisement O des axes illustre une direction d'observation prédéterminée qui correspond à l'axe optique dudit canal optique 2 ; et
- dont les axes illustrent respectivement:
   . une première direction X-X, dite direction horizontale, qui est représentative sur ledit système de visée optique 1 de la direction passant sensiblement aux centres des yeux d'un observateur qui utilise ledit système de visée optique 1 ; et
   . une seconde direction Y-Y, dite direction verticale, qui est orthogonale à la fois à ladite direction X-X et à ladite direction d'observation O.

Selon l'invention, ledit réticule 3 comporte, de plus, au moins une marque 4A, 4B qui est visible par un observateur utilisant ledit système de visée optique 1 et qui est centrée approximativement autour d'un point de centrage P. Ledit point de centrage P est situé sensiblement à une distance D dudit point O (illustrant ladite direction d'observation), selon ladite direction X-X. Selon l'invention, la distance D est telle qu'elle correspond à un angle de visée qui est compris entre 13° et 18° et qui est égal de préférence à 15°.

Par conséquent, grâce à l'invention, ladite marque 4A, 4B permet d'indiquer à tout observateur utilisant le système de visée 1 la position de l'image de la tache aveugle (due à l'absence dans l'oeil humain de cellules nerveuses sensibles à la lumière, au niveau de l'arrivée du nerf optique dans la rétine) dans la scène S1 ou S2 ainsi observée. Cet observateur est ainsi averti du risque de ne pas voir des objets, en particulier des cibles potentielles, situés dans l'alignement direct de ladite marque 4A, 4B.

Selon l'invention, pour que les effets précités puissent être obtenus, ladite marque 4A, 4B est située, par rapport à ladite direction d'observation O et selon ladite première direction X-X, du même côté 5 que l'oeil, généralement l'oeil directeur, utilisé par un observateur regardant selon ledit canal optique 2. Dans l'exemple représenté sur la figure 1, la marque 4A est située du côté droit 5. Elle permet donc de mettre en évidence l'image de la tache optique de l'oeil droit d'un observateur. Une réalisation symétrique, par rapport à la direction Y-Y, permet de mettre en évidence l'image de la tache optique de l'oeil gauche de l'observateur.

Par conséquent, en fonction de l'oeil destiné à être utilisé pour regarder selon ledit canal optique 2, le réticule 3 peut comporter, soit une marque située du côté approprié, comme par exemple la marque 4A de la figure 1 qui est située du côté droit 5, soit deux marques 4B situées de part et d'autre du point O, comme représenté sur la figure 4.

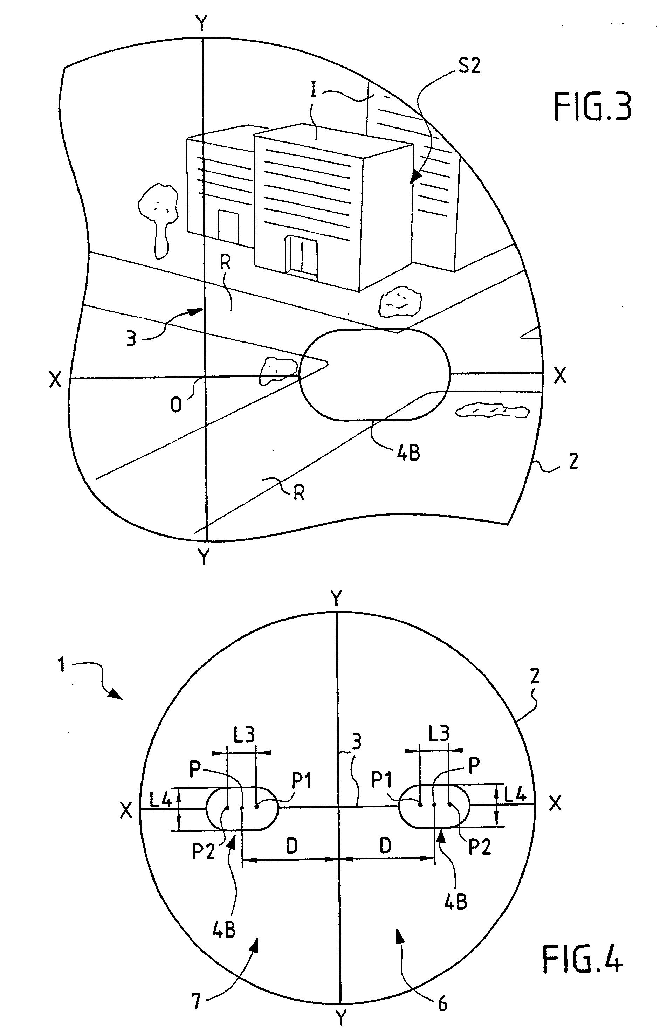

Les figures 2 et 3 permettent de bien mettre en évidence les caractéristiques et avantages de la présente invention.

La figure 2 illustre une scène S1 (susceptible d'être observée au moyen du système de visée 1) qui est telle qu'elle existe effectivement. Cette scène S1 représente un milieu urbain comprenant des immeubles I et des routes R, dans lequel se trouve une cible C, en l'occurrence un char. Cette cible C est située à l'intérieur de la marque 4B.

La figure 3 montre une scène S2 qui correspond à la scène S1 et qui est telle que la voit un observateur qui la regarde avec son oeil droit au travers du système de visée optique 1.

La cible C située dans la direction de la tache aveugle de l'oeil droit n'est pas visible pour cet observateur. Toutefois, en raison de corrections et d'adaptations visuelles faites automatiquement par l'oeil, la portion située autour du point P de la scène vue S2 n'est pas discontinue, mais représente une image complète et claire de sorte que, sans la présente invention, l'observateur ne se douterait pas de ce problème visuel et de la présence possible au niveau de la marque 4B d'une cible C potentielle.

On notera que l'oeil gauche d'un observateur, dont la tache aveugle se trouve du côté gauche, voit telle qu'elle est représentée ladite portion de scène S1 représentée sur la figure 2.

Dans le cadre de la présente invention, la ou les marques du réticule 3 peuvent présenter différentes formes.

Dans le mode de réalisation représenté sur la figure 1, ladite marque 4A présente la forme d'une ellipse :
- dont le petit axe est orienté selon ladite direction X-X et présente une longueur L1 représentative d'un angle de visée de 7° ; et
- dont le grand axe est orienté selon ladite direction Y-Y et présente une longueur L2 représentative d'un angle de visée de 8°.

Dans un second mode de réalisation représenté sur la figure 4, le réticule 3 comporte deux marques 4B. Chaque marque 4B présente une forme oblongue comprenant à chacune des extrémités le long de ladite direction X-X un demi-cercle. La distance L3 entre les centres P1 et P2 desdits demi-cercles est représentative d'un angle de visée de 5°. De plus, ladite marque 4B présente une largeur L4 représentative d'un angle de visée de 8°, selon la direction Y-Y.

Dans ce dernier mode de réalisation, une marque 4B est prévue du côté droit 6 et une marque 4B est prévue du côté gauche 7 du point O, ce qui permet de mettre en évidence les images des taches aveugles respectivement de l'oeil droit et de l'oeil gauche d'un observateur.

Le système de visée 1 de la figure 4, par exemple une longue vue, qui comporte un seul canal optique peut donc être utilisé indifféremment avec l'oeil droit et avec l'oeil gauche.

Dans un autre mode de réalisation non représenté, correspondant à un système de visée, par exemple des jumelles, qui comporte deux canaux optiques, un premier canal optique destiné à l'oeil droit d'un observateur et un second canal optique destiné à l'oeil gauche de cet observateur :
- ledit premier canal optique comporte un réticule comprenant une marque qui est située à droite de ladite direction d'observation selon ladite première direction ; et
- ledit second canal optique comporte un réticule comprenant une marque qui est située à gauche de ladite direction d'observation selon ladite première direction.

En plus des applications précitées, la présente invention peut être appliquée à de nombreux autres dispositifs optiques, en particulier à :
- des lunettes d'observation militaires ;
- un viseur héliporté d'un système d'arme antichar ;
- une voie directe optique de systèmes d'arme (lance-missiles, canon, lance-roquettes, ...) ; et
- des voies vidéo (de téléviseur ou de viseur thermique).

## Revendications

1. Système de visée optique comportant au moins un canal optique (2) auquel est associé au moins un réticule (3), **caractérisé en ce que** ledit réticule (3) comporte au moins une marque (4A, 4B) qui est visible par un observateur utilisant ledit système de visée optique (1) et qui est centrée approximativement autour d'un point de centrage (P), ledit point de centrage (P) étant situé sensiblement à une distance (D) qui est représentative d'un angle de visée compris entre 13° et 18°, par rapport à une direction d'observation prédéterminée (O), selon une première direction (X-X), ladite première direction (X-X) étant représentative sur ledit système de visée optique (1) de la direction passant sensiblement aux centres des yeux d'un observateur qui utilise ledit système de visée optique (1).

2. Système de visée optique selon la revendication 1, **caractérisé en ce que** ledit réticule (3) comporte une seule marque (4A) qui est située, par rapport à ladite direction d'observation (O) et selon ladite première direction (X-X), du même côté (5) que l'oeil utilisé par un observateur regardant selon ledit canal optique (2).

3. Système de visée optique selon la revendication 1, **caractérisé en ce que** ledit réticule (3) comporte deux marques (4B) situées de part et d'autre de ladite direction d'observation (O), selon ladite première direction (X-X).

4. Système de visée optique selon la revendication 1, **caractérisé en ce qu'**il comporte deux canaux optiques, un premier canal optique destiné à l'oeil droit d'un observateur et un second canal optique destiné à l'oeil gauche de cet observateur, **en ce qu'**audit premier canal optique est associé un réticule comprenant une marque qui est située à droite de ladite direction d'observation selon ladite première direction, et **en ce qu'**audit second canal optique est associé un réticule comprenant une marque qui est située à gauche de ladite direction d'observation selon ladite première direction.

5. Système de visée optique selon l'une quelconque des revendications 1 à 4, **caractérisé en ce que** ledit point de centrage (P) est situé, par rapport à ladite direction d'observation (O), sensiblement à une distance (D) qui est représentative d'un angle de visée approximativement de 15°.

6. Système de visée optique selon l'une quelconque des revendications 1 à 5,
**caractérisé en ce que** ladite marque (4A) présente la forme d'une ellipse:
- dont le petit axe est orienté selon ladite première direction (X-X) et présente une longueur (L1) représentative d'un angle de visée de 7°; et
- dont le grand axe est orienté selon une seconde direction (Y-Y) orthogonale à la fois à ladite première direction (X-X) et à ladite direction d'observation (O) et présente une longueur (L2) représentative d'un angle de visée de 8°.

7. Système de visée optique selon l'une quelconque des revendications 1 à 5,
**caractérisé en ce que** ladite marque (4B) présente une forme oblongue pourvue à chacune des extrémités le long de ladite première direction (X-X) d'un demi-cercle, **en ce que** la distance (L3) entre les centres (P1, P2) desdits demi-cercles est représentative d'un angle de visée de 5°, et **en ce que** ladite marque (4B) présente une largeur (L4) représentative d'un angle de visée de 8°, selon une seconde direction (Y-Y) qui est orthogonale à la fois à ladite première direction (X-X) et à ladite direction d'observation (O).

8. Système de visée optique selon l'une quelconque des revendications précédentes,
**caractérisé en ce que** ledit réticule (3) est formé dans au moins un plan de focalisation dudit système de visée optique (1).

## Patentansprüche

1. Optisches Zielgerät, das mindestens einen optischen Kanal (2) umfasst, dem mindestens ein Fadenkreuz (3) zugeordnet ist,
**dadurch gekennzeichnet,**
**dass** das Fadenkreuz (3) mindestens eine Marke (4A, 48) umfasst, die für einen Beobachter sichtbar ist, der das optische Zielgerät (1) benutzt, und die ungefähr um einen Zentrierungspunkt (P) zentriert ist, der im Wesentlichen in einem Abstand (D), der für einen Zielwinkel zwischen 13° und 18° repräsentativ ist, in Bezug auf eine vorbestimmte Beobachtungsrichtung (O) in einer ersten Richtung (X-X) liegt, wobei die erste Richtung (X-X) am optischen Zielgerät (1) repräsentativ für die Richtung ist, die im Wesentlichen durch die Mittelpunkte der Augen eines Beobachters, der das optische Zielgerät (1) benutzt, verläuft.

2. Optisches Zielgerät gemäß Anspruch 1,
**dadurch gekennzeichnet,**
**dass** das Fadenkreuz (3) eine einzige Marke (4A) umfasst, die in Bezug auf die genannte Beobachtungsrichtung (O) und in der ersten Richtung (X-X) auf derselben Seite (5) liegt wie das von einem Beobachter benutzte Auge, der entlang des optischen Kanals (2) schaut.

3. Optisches Zielgerät gemäß Anspruch 1,
**dadurch gekennzeichnet,**
**dass** das Fadenkreuz (3) zwei Marken (4B) umfasst, die beiderseits der Beobachtungsrichtung (O) in der ersten Richtung (X-X) liegen.

4. Optisches Zielgerät gemäß Anspruch 1,
**dadurch gekennzeichnet,**
**dass** es zwei optische Kanäle umfasst, wobei ein erster optischer Kanal für das rechte Auge eines Beobachters und ein zweiter optischer Kanal für das linke Auge diese Beobachters vorgesehen ist, dass dem ersten optischen Kanal ein Fadenkreuz zugeordnet ist, das eine Marke umfasst, die rechts von der Beobachtungsrichtung in der ersten Richtung liegt, und dass dem zweiten optischen Kanal ein Fadenkreuz zugeordnet ist, das eine Marke umfasst, die links von der Beobachtungsrichtung in der ersten Richtung liegt.

5. Optisches Zielgerät gemäß einem der Ansprüche 1 bis 4
**dadurch gekennzeichnet,**
**dass** der Zentrierungspunkt (P) in Bezug auf die Beobachtungsrichtung (O) im Wesentlichen in einem Abstand (D) angeordnet ist, der repräsentativ für einen Zielwinkel von ungefähr 15° ist.

6. Optisches Zielgerät gemäß einem der Ansprüche 1 bis 5,
**dadurch gekennzeichnet,**
**dass** die Marke (4A) die Form einer Ellipse hat,
- deren kleine Achse nach der ersten Richtung (X-X) ausgerichtet ist und eine Länge (L1) besitzt, die repräsentativ für einen Zielwinkel von 7° ist; und
- deren große Achse nach einer zweiten Richtung (Y-Y) ausgerichtet ist, die rechtwinklig sowohl zur ersten.Richtung (X-X) als auch zur Beobachtungsrichtung (O) ist und eine Länge (L2) besitzt, die repräsentativ für einen Zielwinkel von 8° ist.

7. Optisches Zielgerät gemäß einem der Ansprüche 1 bis 5,
**dadurch gekennzeichnet,**
**dass** die Marke (4B) eine längliche Form hat, die an jedem Ende entlang der ersten Richtung (X-X) mit einem Halbkreis versehen ist, dass der Abstand (L3) zwischen den Mittelpunkten (P1, P2) der Halbkreise repräsentativ für einen Zielwinkel von 5° ist und dass die Marke (4B) eine für einen Zielwinkel von 8° repräsentative Breite (L4) in einer zweiten Richtung (Y-Y), die gleichzeitig zur ersten Richtung (X-X) und zur Beobachtungsrichtung (O) rechtwinklig ist, besitzt.

8. Optisches Zielgerät gemäß einem der vorstehenden Ansprüche,
**dadurch gekennzeichnet,**
**dass** das Fadenkreuz (3) in mindestens einer Fokussierungsebene des optischen Zielgeräts (1) gebildet wird.

## Claims

1. Optical sighting system comprising at least one optical channel (2) with which there is associated at least one reticle (3),
**characterized in that** said reticle (3) comprises at least one mark (4A, 4B) which is visible to an observer using said optical sighting system (1) and which is centred approximately about a centring point (P), said centring point (P) being situated substantially at a distance (D) which is representative of a sighting angle of between 13° and 18°, with respect to a predetermined direction of observation (O), according to a first direction (X-X), said first direction (X-X) being representative on said optical sighting system (1) of the direction passing substantially by the centres of the eyes of an observer who is using said optical sighting system (1).

2. Optical sighting system according to Claim 1, **characterized in that** said reticle (3) comprises a single mark (4A) which is situated, with respect to said direction of observation (O) and along said first direction (X-X), on the same side (5) as the eye used by an observer looking along said optical channel (2).

3. Optical sighting system according to Claim 1, **characterized in that** said reticle (3) comprises two marks (4B) situated on either side of said direction of observation (O) along said first direction (X-X).

4. Optical sighting system according to Claim 1, **characterized in that** it comprises two optical channels, a first optical channel intended for the right eye of an observer and a second optical channel intended for the left eye of this observer, and **in that** with said first optical channel there is associated a reticle comprising a mark which is situated to the right of said direction of observation along said first direction, and **in that** with said second optical channel there is associated a reticle comprising a mark which is situated to the left of said direction of observation along said first direction.

5. Optical sighting system according to any one of Claims 1 to 4,
**characterized in that** said centring point (P) is situated, with respect to said direction of observation (O), substantially at a distance (D) which is representative of a sighting angle of approximately 15°.

6. Optical sighting system according to any one of Claims 1 to 5,
**characterized in that** said mark (4A) exhibits the shape of an ellipse:
- whose minor axis is oriented along said first direction (X-X) and exhibits a length (L1) representative of a sighting angle of 7°; and
- whose major axis is oriented along a second direction (Y-Y) orthogonal both to said first direction (X-X) and to said direction of observation (O) and exhibits a length (L2) representative of a sighting angle of 8°.

7. Optical sighting system according to any one of Claims 1 to 5,
**characterized in that** said mark (4B) exhibits an oblong shape provided at each of its ends along said first direction (X-X) with a semicircle, **in that** the distance (L3) between the centres (P1, P2) of said semicircles is representative of a sighting angle of 5°, and **in that** said mark (4B) exhibits a width (L4) representative of a sighting angle of 8°, according to a second direction (Y-Y) which is orthogonal both to said first direction (X-X) and to said direction of observation (O).

8. Optical sighting system according to any one of the preceding claims,
**characterized in that** said reticle (3) is formed in at least one focusing plane of said optical sighting system (1).
